# EUROPEAN PATENT APPLICATION

(11) **EP 1 406 435 A1**
(43) Date of publication of application: **07.04.2004**
(21) Application number: 03256053.4
(22) Date of filing: 26.09.2003
(51) Int. Cl.: H04N 5/225, G02B 6/04, H04N 5/335

(54) **Optical fiber array camera**

(30) Priority: 26.09.2002 JP 2002281751
(71) Applicant: National Institute of Advanced Industrial Science and Technology, Tsukuba-shi, Ibaraki 305-8568 (JP)
(72) Inventor: Ohba, Kohtaro National Institute of, 1-2-1Namiki Tsukuba-shi Ibaraki 305-8568 (JP)
(74) Representative: Cross, Rupert Edward Blount

(57) **Abstract**

A fiber array camera has a plurality of optical fibers, a fiber assembly unit in which the optical fibers are bundled together and an image pickup surface comprising end surfaces of the optical fibers is formed, a light receiving lens for focusing an image of an object on the image pickup surface, and a plurality of light receiving elements, each of which is connected to one of the optical fibers and receives an optical signal for one pixel therefrom.

## Description

### Technical Field of the Invention

The present invention relates to a fiber array camera, especially to a high speed camera in which a fiber array and photo acceptance units are combined.

### Description of Related Art

Conventionally, in the field of bioscience, it is required that about 1/1000 change of light intensity be observed by the 10⁻¹⁵ second to analyze electrical potential of cell membranes. Cameras for observing such phenomenon are required to have image pickup elements with high-speed, high-sensitivity and high-dynamic range.

However, although a CCD (Charge Coupled Device) type image pickup element can realize high resolution since the pixel size is about 5 to 10 µ m, the charge transfer speed for reading pixels is slow, therefore, it is difficult to speed up reading speed.

Although the pixel reading speed of a CMOS type image pickup element is fast, the sensitivity thereof is low because of switching noise by a transistor(s). Both CCD and CMOS types of image pickup element has disadvantages that the sensitivity is low because of cross talk between pixels and the dynamic range is limited.

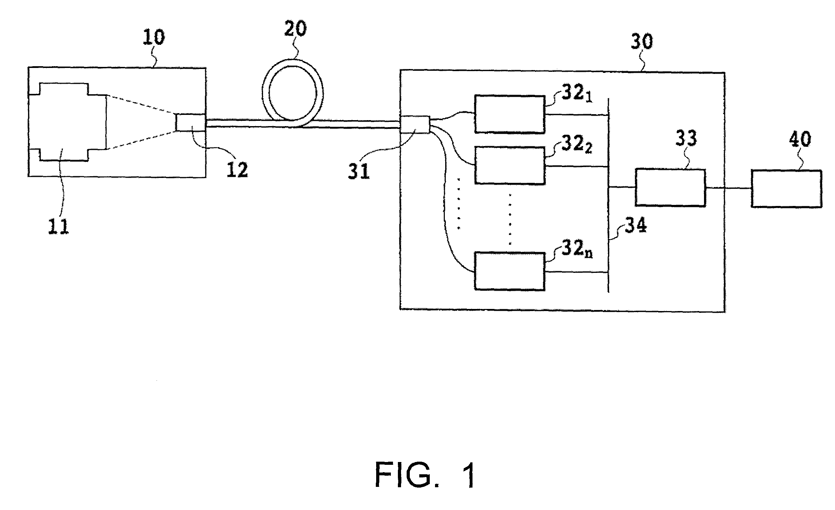

On the other hand, It is possible to realize a three dimensional array sensor by transferring two dimensional image by an optical fiber array in which optical fibers are bundled together in a group and combining the CCD type image pickup element therewith. See pages 5 to 7 and Figure 1 of Japanese Laid Open Patent Number 11-201725.

### Summary of the Invention

It is possible to make up a fiber array camera by placing an optical system for taking images of an object in the three dimensional array sensor. However, because of limits of image pickup element's function as described above, it is difficult to realize a high speed camera with high sensitivity and high dynamic range.

On the other hand, although a photo acceptance unit used in the field of optical communication have high-speed, high sensitivity and high dynamic range, such a photo acceptance unit is only one image pickup element, therefore, it is difficult to obtain high integration for high resolution.

In view of the above problems, the present invention provides a fiber array camera meeting the requirements of high-speed, highly sensitivity and large dynamic range.

A fiber array camera comprises a plurality of optical fibers, a fiber assembly unit in which the optical fibers are bundled together and an image pickup surface comprising end surfaces of the optical fibers is formed, a light receiving lens for focusing an image of an object on the image pickup surface, and a plurality of light receiving elements, each of which is connected to one of the optical fibers and receives an optical signal for one pixel therefrom.

The image pickup surface may be part of an arc or spherical surface whose center is a point on an optical axis of the light receiving lens.

The end surfaces may be in hound's-tooth arrangement.

The fiber array camera may have a preamplifier for converting output current of the light receiving elements into voltage, an A/D converter for converting the voltage into digital signals, a memory for successively storing the digital signals, and an image signal output unit in which the image signal output unit reads out the digital signals so as to form a digital image signal of the object.

The present invention will become more apparent from the following detailed description of the embodiments and examples of the present invention. The reference characters in claims are attached just for convenience to clearly show correspondence with the drawings, which are not intended to limit the present invention to the configurations shown in the accompanying drawings.

### Description of the Drawings

Fig.1 is a schematic view of a fiber array camera according to an embodiment of the present invention;
Figs.2A and 2B show a schematic side view of a fiber assembly according to an embodiment of the present invention respectively;
Figs.3A and 3B show a plan view showing the fiber assembly according to an embodiment of the present invention respectively;
Fig.4 is a block diagram showing the structure of an image processing unit according to a first embodiment of the present invention; and
Fig.5 is a block diagram showing the structure of an image processing unit according to a second embodiment of the present invention.

### Detailed Description of the Invention

Description of embodiments according to the present invention will be given below referring to Figs.1 to 5.

According to the present invention, a high speed and highly sensitive fiber array camera having a large dynamic range can be realized by combining an optical fiber array and a photo acceptance unit such as a photo diode.

Fig. 1 is a schematic view of a fiber array camera according to an embodiment of the present invention

The fiber array camera comprises an image pickup unit 10 for scanning an image of an object, a digital processing unit 30 for converting an optical signal(s) scanned by the image pickup unit 10 into a digital image signal(s) and a combined optical fiber cable 20 for connecting the image pickup unit 10 to the digital processing unit 30. The fiber array camera has a communication unit 40 for converting the digital signal into an image signal(s) in a predetermined format and for transmitting the signal to a network. In this embodiment, a 32x32 pixel fiber array camera is explained as an example.

The image pickup unit 10 has a light receiving lens system 11 for focusing the image of the object on an image pickup surface of a fiber assembly 12. The fiber assembly 12 has the image pickup surface comprising 32x32 optical fiber end surfaces. The combined optical fiber cable 20 comprises 32x32 optical fibers, each of which transmits a light signal(s) of one pixel.

The digital processing unit 30 has pixel processing units 32₁-32ₙ for converting a light signal(s) for one pixel into a digital image signal(s), a optical fiber terminal portion 31 for connecting each optical fibers of the combined light fiber cable to corresponding pixel processing units 32₁-32ₙ, and image signal output unit 33 for forming and outputting a digital image signal(s) of the 32x32 pixels based on the digital image signal(s) of the one pixel. The pixel processing units 32₁-32ₙ and the image signal output unit 33 are connected to an internal bus 34.

The image signal output unit 33 successively read a digital image signal for one pixel so as to form an object image comprising 32x32 pixels. The communication unit 40 receives the digital image signal(s) of the object from the image signal output unit 33 and carries out digital image compression process, image format conversion process, and/or communication format conversion process so as to output an image signal(s). All or some of the processes of the communication unit 40 may be carried out in the image signal output unit 33.

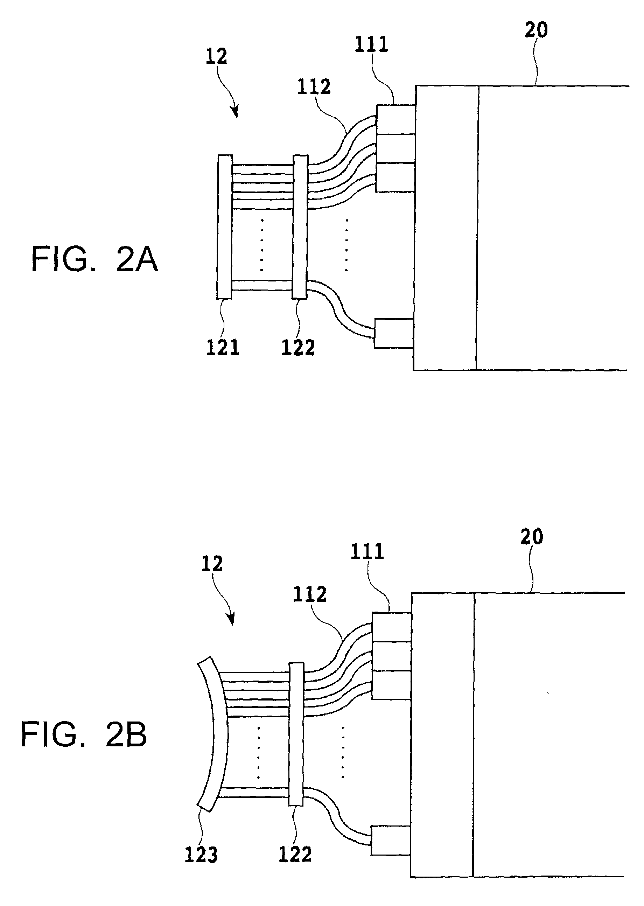

Figs.2A and 2B show a schematic side view of a fiber assembly according to an embodiment of the present invention respectively. In the fiber assembly 12, a naked optical fiber 112 is pulled out from each optical fiber 111 which is placed in the combined optical fiber cable, and fixed by guide plates 121 and 122. The guide plates 121 and 122 are metal plates and have 32x32 holes therein. The naked optical fiber 112 has an end surface at one end so as to form the image pickup surface. Thus, Fig. 2A shows an example of a flat image pickup surface.

Fig. 2B shows an example of a curved image pickup surface with respect to light receiving image system 11. For example, the curved image pickup surface may be part of an arc or spherical surface whose center is a point on an optical axis of the light receiving lens system 11.

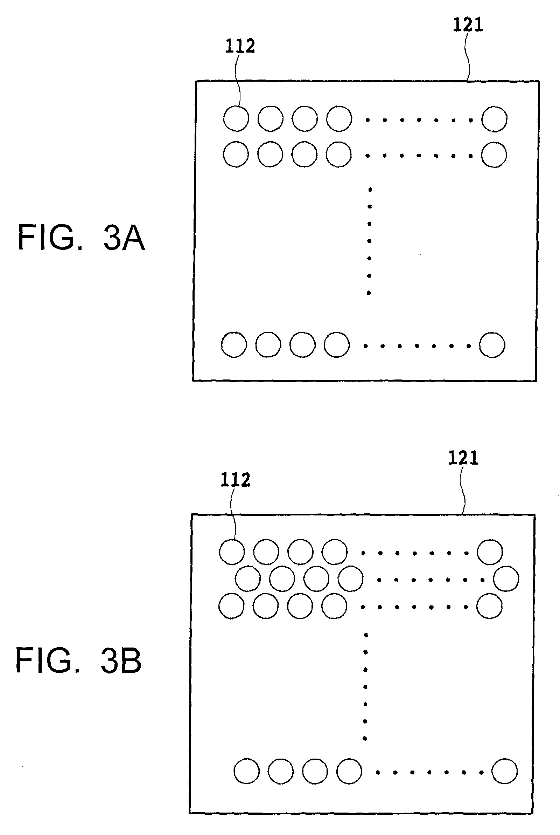

Figs.3A and 3B show a plan view showing the fiber assembly according to an embodiment of the present invention respectively. As shown in Fig. 3A, the naked optical fibers 112 on the guide plate 121, forms a gridlike structure. As shown in Fig. 3B, the image pickup surface may have a hound's-tooth check structure to obtain aperture area rate depending on the purposes for using the camera. It is not necessary to use the guide plate 121 as shown in Fig. 3B, that is, these optical fibers 112 may be stacked up in the form of grid and hound's-tooth check structure without such a guide plate. Thus it is possible to secure a large opening area subject to relationship between the number of optical fibers comprising one pixel and the light receiving lens system 11 depending on purposes for using the camera so that it is possible to improve the sensitivity.

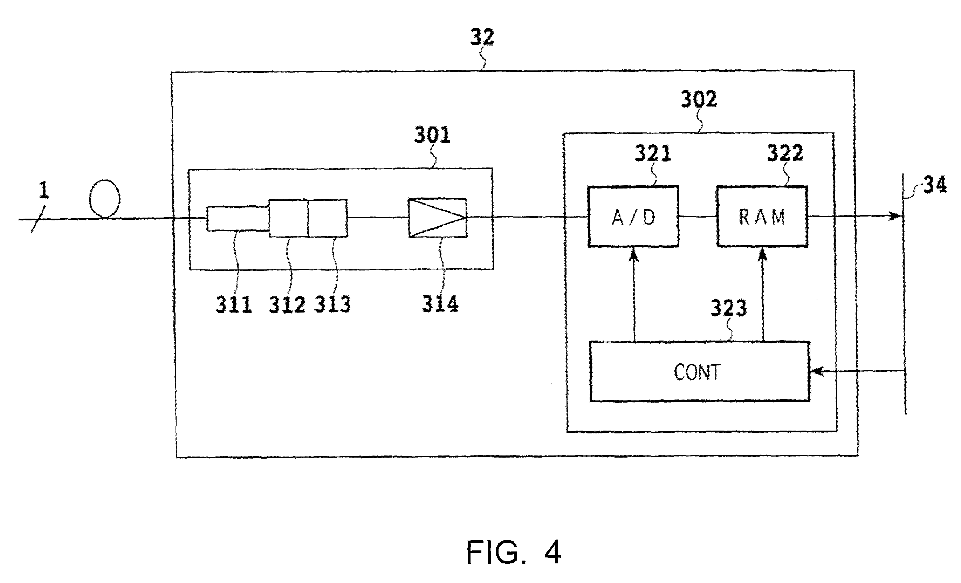

Fig.4 is a block diagram showing the structure of an image processing unit according to a first embodiment of the present invention.

A pixel processing unit 32 for one pixel comprises a light receiving portion 301 and a digital converting portion 302. The light receiving unit 301 has a connector 311 for connecting the optical fibers, a light receiving lens 312, a preamplifier 313 and an amplifier 314. For the light receiving element, an APD (Avalanche Photo Diode), pin-PD or the like is used. It is possible for these light receiving elements to realize high speed such as a couple of GHz and a large dynamic range such as 36dB. By selecting kind of a light receiving element, it can be compatible with a wide range wave length from ultraviolet to infrared radiation. Further, there is no cross talk which is a problem of image pickup elements, and the camera is not desensitized since the light receiving element is independently arranged.

The digital converting portion 302 has an A/D converter 321 for converting output(s) of an amplifier 314 into digital signal(s), RAM 322 for temporarily storing a digital image signal(s). A controlling unit 323 supplies a controlling signal(s) such as a clock signal(s) to the A/D converter 321 and the RAM 322 and is connected to the image signal output unit 33 (not shown in Fig. 4) via the internal bus 34.

A light signal for one pixel is converted into an electronic signal(s) in the light receiving portion 301. The electronic signal is converted into a digital signal(s) in the A/D converter 321 of the digital converting portion 302. Then the digital signal is stored in the RAM 322. For example, it is possible to achieve photography at high speed such as 100 million times per second and with large dynamic range of 40 dB by using a 14 bit A/D converter with 100 MHz clock frequency. Two 16 Mega bite RAMs are used as the RAM 322 capable of storing digital signals for 1600 pictures. The image signal output unit 33 forms 32x32 pixel image of an object by successively reading digital image signal(s) for one pixel from the RAM 322 via the internal bas 34.

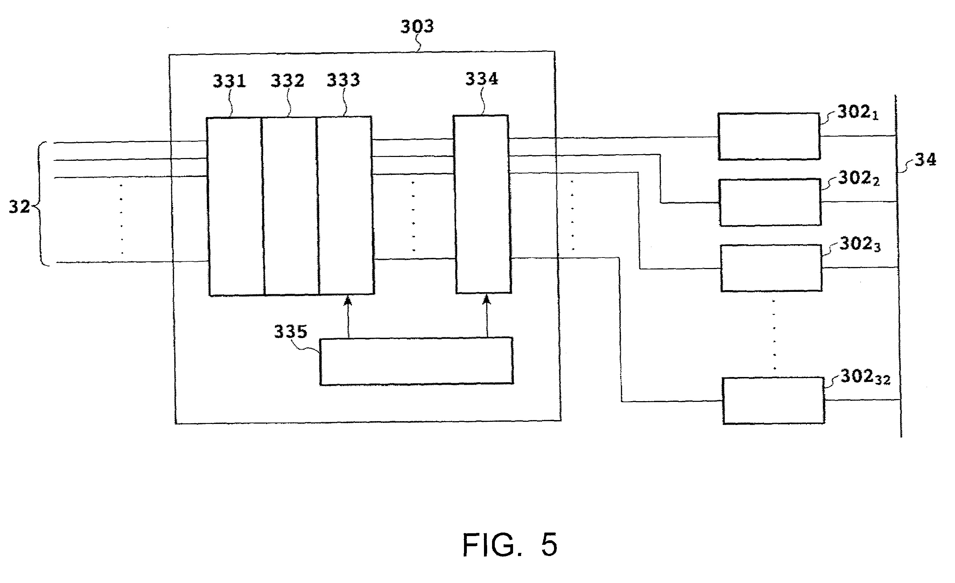

Fig.5 is a block diagram showing the structure of an image processing unit according to a second embodiment of the present invention.

The light receiving portion 303 receives light from 32 optical fibers which are in a line and on the image pickup surface of the fiber assembly 12. The light receiving portion 303 has a combined connector 331 to connect the 32 optical fibers to a condenser 332, a light receiving element array 333 and then an amplifier array 334.

It is possible to minimize the light receiving portion by forming an array comprising optical fibers in a line and it is possible to easily make up a fiber array camera having various number of pixels, adopting the light receiving portion 303 as a unit.

Further, a cooling element 335 is provided to release heat from the light receiving element array 333 and the amplifier 334. It is possible to reduce dark current and improve sensitivity by cooling the light receiving element array. Outputs of the amplifier 334 are input to the digital converter 302₁-302₃₂ by each pixel as shown in Fig. 4. The digital converter 302 may be adopted to have 1 line integrated structure as well as the light receiving portion 303.

As described above, according to the present invention, a plurality of optical fibers are bundled together in a group. The image pickup surface of the fiber assembly comprises optical fiber end surfaces, each of which comprises one pixel. The light receiving lens focus an object image on the image pickup surface of the fiber assembly. A plurality of light receiving elements, each of which is connected to a corresponding optical fiber, receive a light signal(s) for one pixel. Therefore, it is possible to realize high speed, high sensitivity camera with a large dynamic range.

The disclosure of Japanese Patent Application No. 2002-281751 filed on September 26, 2002 including specification, drawings and claims is incorporated herein by reference in its entirety.

Although only some exemplary embodiments of this invention have been described in detail above, those skilled in the art will readily appreciated that many modifications are possible in the exemplary embodiments without materially departing from the novel teachings and advantages of this invention. Accordingly, all such modifications are intended to be included within the scope of this invention.

## Claims

1. A fiber array camera comprising:
a plurality of optical fibers;
a fiber assembly unit in which the optical fibers are bundled together and an image pickup surface comprising end surfaces of the optical fibers is formed;
a light receiving lens for focusing an image of an object on the image pickup surface; and
a plurality of light receiving elements, each of which is connected to one of the optical fibers and receives an optical signal for one pixel therefrom.

2. The fiber array camera according to claim 1, wherein the image pickup surface is part of an arc or spherical surface whose center is a point on an optical axis of the light receiving lens.

3. The fiber array camera according to claim 1, wherein the end surfaces are in hound's-tooth arrangement.

4. The fiber array camera as in claim 1, 2, or 3, further comprising a preamplifier for converting output current of the light receiving elements into voltage, an A/D converter for converting the voltage into digital signals, a memory for successively storing the digital signals, and an image signal output unit in which the image signal output unit reads out the digital signals so as to form a digital image signal of the object.
